# EUROPEAN PATENT APPLICATION

(11) **EP 1 170 150 A2**
(43) Date of publication of application: **09.01.2002**
(21) Application number: 01000208.7
(22) Date of filing: 12.06.2001
(51) Int. Cl.: B44F 1/04

(54) **Printing method**

(30) Priority: 15.06.2000 FI 20001430
(71) Applicant: Polar Electro Oy, 90440 Kempele (FI); Ensto Audel Oy, 90460 Oulunsalo (FI)
(72) Inventor: Rantala, Helena, 15700, Lahti (FI); Oksanen, Minna, 91910, Tupos (FI)
(74) Representative: Antila, Harri Jukka Tapani

(57) **Abstract**

A plastic structure (208) manufactured by injection moulding, comprising a surface (208A) and a decorative print (202 to 204) at least partly covering the surface (208A). The decorative print (202 to 204) comprises, starting from the surface of the plastic structure (208), the following layers: a base colour (204) and a texture (202) made of a functional colourant, whereby a critical angle exists, and at viewing angles larger than the critical angle with respect to the decorative print (200 to 204), the texture is transparent such that the base colour (204) is visible.

## Description

### FIELD OF THE INVENTION

The invention can be applied to plastic structures manufactured by injection moulding, which are used e.g. in portable devices and devices worn on the wrist, such as watches, wrist computers or the like. The invention relates particularly to the surface decoration of such plastic structures.

### BACKGROUND OF THE INVENTION

A technology called injection moulding is a method for manufacturing plastic structures, such as covers of e.g. watches and heart rate monitors. In order to produce a product by injection moulding, melted plastic is injected into a mould shaped according to the product to be manufactured.

While being manufactured, injection-moulded products are often provided with a decorative print, such as textual graphics comprising text, symbols and characters and possible colouring, which at least partly covers the surface of a product. At its simplest, textual graphics are engraved on a product afterwards or they are provided in the mould as pre-imprinted recesses to be formed onto the product during injection moulding. A part can be provided with a decorative print also afterwards, after being manufactured by injection moulding, during post-mould decoration PMD. A plastic structure may also be decorated during casting, according to a technology called in-mould decoration IMD, which is described e.g. in publication EP 0953422A2. In the solution described in the publication, a decoration sheet comprising a decorative print is inserted into a mould, the mould is closed and the decoration sheet in the mould is covered with melted plastic. Depending on the IMD technology, the print is attached to the plastic structure either with or without the decoration sheet. Advantages of the IMD technology over other printing methods include e.g. that the method allows printing on three-dimensional surfaces and more than one colour to be used.

In the prior art solutions used in the IMD technology, a decorative print is formed on the decoration sheet e.g. as one to ten layers of colour. The colours used are generally colourants with good opacity, i.e. lack of transparency. In the known solutions, a decorative print actually consists of two layers: textual graphics and base colour formed in the background of the textual graphics.

The prior art solution for producing decorative prints in connection with the IMD technology does, however, present some drawbacks. The known printing methods have not completely utilized the potential provided by the colours and plurality of printing colour layers, and only few special effects in the visual appearance of a decorative print provided by different viewing angles have been presented.

### BRIEF DESCRIPTION OF THE INVENTION

An object of the invention is to provide an improved method and an apparatus implementing the method for producing a decorative print for plastic parts manufactured by injection moulding.

The invention relates to a method for producing a decorative print onto a decoration sheet to be used in connection with injection moulding when decorating a structure. The method comprises providing the decoration sheet with a decorative print comprising a texture using a functional colourant and a base colour at least partly on top of the texture, whereby a critical angle exists for viewing the decorative print, and at viewing angles larger than the critical angle the texture is transparent such that the base colour to be provided against the structure is visible, and an angle area exists comprising viewing angles smaller than the critical angle, from which angles the texture can be seen.

The invention also relates to a method for producing a surface decoration for a structure in connection with injection moulding, the method comprising inserting a decoration sheet comprising a decorative print into a mould defining the shape of the structure and injecting melted structural material into the mould in order to produce the structure and decorate the structure with the decorative print in the decoration sheet. The decorative print of the decoration sheet comprises a base colour to be provided against the plastic structure and a texture produced using a functional colourant, the texture being transparent when viewed from viewing angles larger than a critical angle with respect to the surface of the decorative print such that the base colour is visible, the texture being visible at viewing angles smaller than the critical angle.

The invention also relates to a plastic structure manufactured by injection moulding, comprising a surface and a decorative print at least partly covering the surface. Starting from the surface of the plastic structure, the decorative print comprises the following layers: a base colour and a texture made of a functional colour, whereby a critical angle exists, and at viewing angles larger than the critical angle with respect to the decorative print, the texture is transparent such that the base colour is visible.

Preferred embodiments of the invention are disclosed in the dependent claims.

The invention thus relates to a method and an apparatus implementing the method for producing a print in connection with injection moulding. The solution of the invention relates to prints produced using the known IMD technology wherein a decoration sheet comprising a decorative print is inserted into a mould. When melted plastic is injected into the mould, either the sheet and the decorations therein become attached to a plastic structure or the decorative material becomes detached from the decoration sheet. In the solution of the invention, the decorative print to be produced onto the plastic structure comprises a texture and a base colour. A texture refers to patterning formed by shaping symmetric and/or asymmetric patterns. A base colour refers to a layer of background colour of a decorative print closest to a plastic structure. In the invention, the texture is produced using a functional colourant, such as a pearlescent colour or an interference colour. In connection with the description of the invention, a functional colourant thus refers to a colourant which comprises optic lamellas, discs, strips or other such elements affecting the way in which light is reflected or deflected. When viewing a functional colourant layer, a critical angle exists, and at viewing angles smaller than the critical angle, a phenomenon similar to optical total reflection occurs, which brings the texture formed using a functional colourant into view. When viewed from viewing angles larger than the critical angle, e.g. from a viewing angle substantially perpendicular with respect to the surface of the plastic structure, the colourant layer is transparent, i.e. in the solution of the invention, the base colour is visible. When viewed from different angles, light is thus reflected to a viewer's eyes from different layers, e.g. when viewed from an angle smaller than the critical angle, light is reflected from the functional colourant layer, whereas when viewed from angles larger than the critical angle, light is reflected from the base colour layer. The magnitude of the critical angle depends on the optical elements used in the functional colourant. A varnish contained in the functional colourant is transparent, which makes the colourant transparent when viewed from angles larger than the critical angle. In a preferred embodiment of the invention, the base colour is light, enabling the special effect of the invention to be achieved optimally. Preferably, a solid colour is used as the base colour. It is obvious that colour layers, such as textual graphics, can also be formed on top of the functional colourant layer; this, however, is not crucial to the invention.

It is obvious that the printing layers, textual graphics, texture and base colour mentioned above can be printed or painted onto the decoration sheet as multiple layers without by any means restricting the invention to the number of printings. Preferably, the printing material is produced onto the decoration sheet using a technology called screen printing, wherein colour is transferred to the material to be printed through a screen cloth. Screen printing is a known printing method, which enables patterns to be printed on many different materials, such as plastic, glass, wood or cloth.

According to the invention, a print is produced onto a decoration sheet to be placed against a plastic structure in the following order: a texture and a base colour, which means that the texture is formed against the decoration sheet and the base colour is arranged against the plastic structure during injection moulding. Preferably, the decoration sheet comprising the decorative print is cut off in connection with injection moulding to be attached to the plastic structure. In an embodiment, the decoration sheet is a double sheet, in which case the printing material is provided between two polymer sheets. The decoration sheet used is preferably made of polymer plastic, without, however, by any means restricting the invention to any specific polymer plastic.

An advantage of the invention is a special viewing effect wherein at certain viewing angles, the transparent texture produced using a functional colourant disappears such that the base colour comes into view.

### BRIEF DESCRIPTION OF THE DRAWINGS

In the following, the invention will be described in closer detail with reference to the accompanying drawings, in which

Figure 1 shows an apparatus used in injection moulding,

Figure 2A shows a structure of a decoration sheet according to an embodiment of the invention,

Figure 2B shows texture patterns according to an embodiment of the invention,

Figure 2C shows a viewing effect achieved by a solution of an embodiment of the invention.

Figure 3 shows a preferred embodiment of a method of the invention.

### DETAILED DESCRIPTION OF THE INVENTION

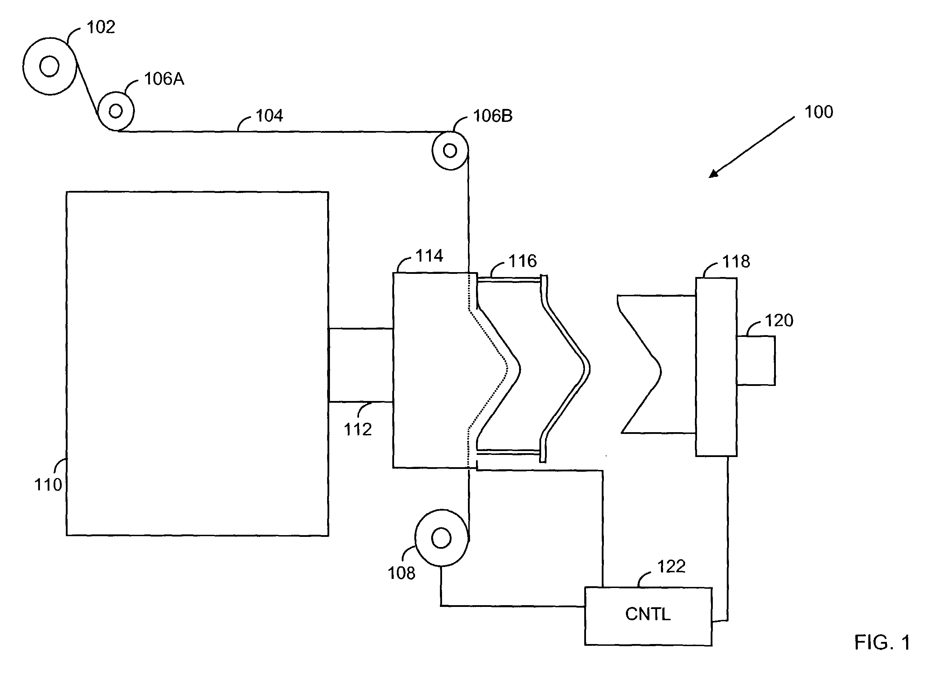

In the following, the invention will be described by means of preferred embodiments and with reference to the accompanying drawings 1 to 2C. Figure 1 shows an arrangement 100 for manufacturing and coating plastic structures to be manufactured by injection moulding using a technology called IMD. In the following, the arrangement will be described only for parts relevant to the invention, and it is obvious that the arrangement also comprises other parts than those shown in Figure 1, the operation of those parts being, however, obvious to one skilled in the art.

The arrangement 100 comprises a reel-like pay-off coil 102 to feed a decoration sheet 104 comprising a decorative print to be used for decorating a plastic structure. In the present connection, decorating refers to decorative colouring, such as textual graphics, texture and base colour, to be provided onto a plastic structure to be produced. According to the prior art, the sheet to be used can be a double sheet wherein colours are provided between two polymer sheets. The colours are then better protected from the effect of a pressure wave caused by injecting a melted plastic mass. The sheet may also be a decoration sheet comprising a single layer. The decoration sheet 104 being fed is controlled and held tight by means of control wheels 106A and 106B. The decoration sheet 104 passed through the arrangement 100 is collected on a reel-like take-up coil 108. The decoration sheet 104 can actually be transferred from the pay-off coil 102 to the take-up coil 108 in many ways, such as by means of several control wheels, rolling the take-up coil 108 or in another similar manner. The feeding rate and volume of the decoration sheet 104 can be controlled e.g. using control equipment 122 implemented e.g. by software. In a preferred embodiment of the invention, the sheet 104 and the printing material therein remain in the mould, in which case the arrangement 100 comprises a cutting edge for cutting the decoration sheet; no take-up coil 108 is then necessarily required.

A mould part comprises a first mould 114 and a second mould 118, which can be located in an open space or in a confined place with respect to each other. Figure 1 shows an open space, in which case the first and the second moulds exist separately from each other. Preferably, the first mould 114 comprises a cavity for melted plastic when the moulds are located in a confined space with respect to each other. The first mould 114 can be moved by means of a transfer device 112 with respect to a supporting structure 110 of the arrangement. Although not shown in the figure, it is obvious that the arrangement 100 also comprises means for moving the second mould 118 towards and away from the first mould 114. Preferably, the movement of the moulds with respect to each other is controlled by the control equipment 122. To the second mould 118, injection means 120 are connected for injecting melted plastic between the moulds 114, 118 when the moulds are located in a confined space with respect to each other. The moulds used are manufactured e.g. of metal or a ceramic material.

The decoration sheet 104 is brought to the first mould 114 and tightened onto the mould by a press 116. The first mould 114 may comprise suction holes to suck the decoration sheet 104 tightly against the first mould 114. As is well known, the decoration sheet 104 may be preheated by a preheater, which makes the decoration sheet 104 easier to shape onto the first mould 114. Hot, high pressure oil can also be used to give the decoration sheet a three-dimensional shape. In an embodiment, the arrangement 100 also comprises a heater for detaching the material on the decoration sheet 104 from the decoration sheet 104 into the plastic structure. The preheater and heater can be implemented e.g. as a ceramic heater or a panel heater. The decoration sheet 104 is heated before the moulds are placed in a confined space and before melted plastic is injected into the cavity.

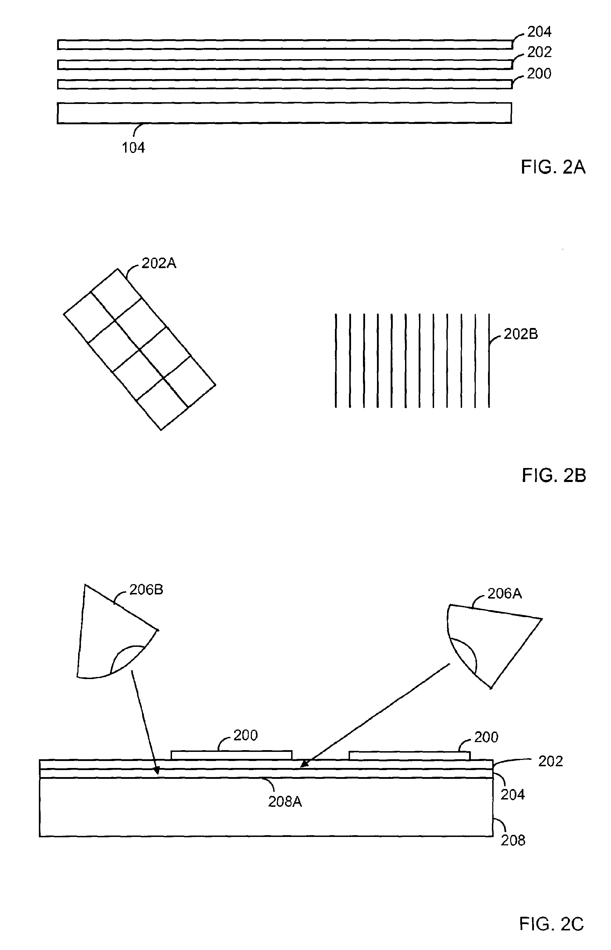

Figure 2A shows the structure of a decoration sheet according to a preferred embodiment of the invention. The decoration sheet structure used as an example in Figure 2A is a structure comprising one sheet, as distinct from a double sheet structure, without, however, restricting the invention to either sheet structure. The decoration sheet used in connection with the invention may be any known decoration sheet structure, such as a polymer sheet. First, the decoration sheet 104 is provided with textual graphics 200, such as symbols and text. The textual graphics 200 is printed or painted onto the sheet 104 using prior art technologies, such as screen printing. The textual graphics 200 is preferably printed using a solid colour in 1 to 4 layers. A surface pattern 202, i.e. a texture, comprising symmetric and/or asymmetric figures, is provided on top of the textual graphics 200. According to the invention, the texture 202 is formed using a functional colourant, such as a pearlescent colour or an interference colour. A characteristic feature of the texture 202 formed using a functional colourant is that at certain angles of incidence of light, the texture 202 is transparent, or at least translucent, which means that the colour material under the texture is visible. Herein, translucency refers to partial transparency caused by a transparent and colourless varnish contained in the functional colourant and the characteristic features of the optical elements. Preferably, the functional colourant is colourless, a possible colouring being produced by mixing a desired colour pigment with the colourant. If, for example, the functional colourant is to be blue, a blue colour pigment would be mixed with the colourless base colour as a colourant or colour powder.

On top of the texture 202, a base colour 204 is provided onto the decoration sheet 104 e.g. by a common solid colour. Preferably, the base colour 204 is light and e.g. lighter than the base colour used in the textual graphics. The base colour 204 is preferably painted about 1 to 4 times, without restricting the invention thereto. In order to optimize the resolution power, i.e. contrast, between the base colour and the texture, the shades of colour to be used have to be selected discriminatively. If the base colour used is very light, the texture can be printed using a darker colourant than in the case of a darker base colour. The base colour used in the invention is preferably a shade of grey on a CMYK (Cyan Magenta Yellow Black) scale. The scale is used for defining a shade of grey on a scale ranging from 0% to 100%, wherein 0% refers to lightest light and 100% refers to darkest dark. In the invention, the shade of grey of the base colour is less than 50%, being 20% or 35% in some preferred embodiments of the invention. Preferably, heat- and UV-light-resistant solid colours are used in the textual graphics and as the base colours. Herein, a solid colour refers to a basic colour listed and encoded in common colour charts, comprising no additives to change the characteristic features of the colour.

By way of example, Figure 2B shows two simple textures 202A and 202B comprising symmetric elements. Of course, textures may also be asymmetric, such as designs given cloud- or wave-patterned shapes. Furthermore, it is obvious that the texture may comprise both symmetric elements and asymmetric elements. Figure 2C, in turn, shows a special effect in a final plastic structure 208 manufactured by injection moulding to be achieved by a solution of the invention. The plastic structure 208 comprises a surface 208A at least partly covered by a decorative print. Although the surface 208A is shown in the figure as an even plane surface, it is obvious that the solution of the invention is also suitable for decorating a surface comprising roughnesses and three-dimensional surface profiles to the extent to which injection moulding allows. The solution of the invention enables a scintillating decorative print highly resistant to wear and tear to be produced onto the plastic structure. Starting from the surface 208A of the plastic surface 208, the decorative print comprises the following layers: a base colour 204, a texture 202 and textual graphics 200. The above-mentioned layers 200 to 204 at least partly overlap with each other such that the base colour 204 and the texture 202 at least partly overlap. The textual graphics 200 according to an embodiment of the invention, in turn, at least partly overlap with the texture 202. At a certain viewing angle smaller than a critical angle and low with respect to the plastic structure 208, the viewing angle being designated by an eye 206A, the texture 202 formed using a functional colourant is visible to a viewer. At a viewing angle larger than the critical angle, the viewing angle being designated by an eye 206B, the viewer, through the transparent texture 202, can see the light base colour 204 provided against the surface 208A of the plastic structure 208. The critical angle mentioned above is e.g. 45 degrees, which means that a phenomenon similar to optical total reflection occurs at angles smaller than 45 degrees with respect to the surface 208A of the plastic structure 208, whereas the transparency effect occurs at angles larger than the mentioned critical angle with respect to the surface 208A. The texture 202 according to an embodiment formed using a functional colourant provides a second critical angle, which is smaller than the critical angle mentioned. When viewed from viewing angles smaller than the second critical angle, the texture 202 disappears again and the base colour 204 is reflected to the viewer. If a potential viewing angle area refers to an angle area from 0 to 90 degrees with respect to the surface, a viewing angle of 0 degrees refers to a viewing angle parallel with the surface plane and a maximum viewing angle of 90 degrees refers to a viewing angle parallel with the perpendicular of the surface. In the viewing angle area, then, a first angle area (e.g. 0 to 20 degrees) and a third angle area (45 to 90 degrees) exist from which the texture 202 is invisible, whereas in a second angle area (20 to 45 degrees) between the aforementioned angle areas the texture 202 is visible. The aforementioned viewing angle refers to an angle with respect to the surface, so it is obvious that the special effect according to the invention is achieved from the entire angular sector comprising all directions around the structure. The special effect according to the invention is thus not dependent on the direction from which the structure is being viewed, only on the angle between the viewer and the surface.

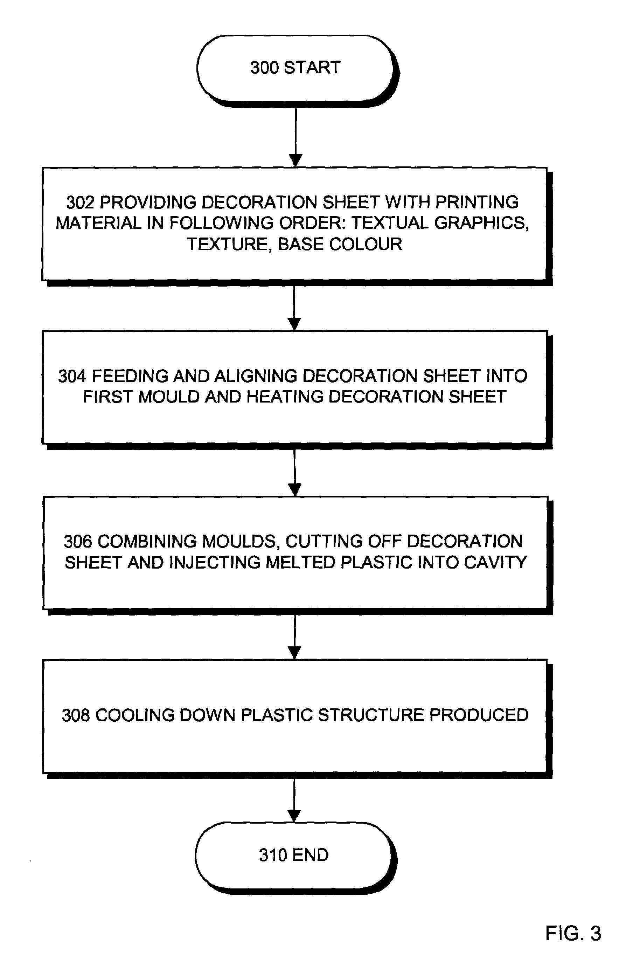

Figure 3 shows a preferred embodiment of the method of the invention. In method step 302, a printing material is produced onto a single polymer sheet in the following order: a texture and a base colour. The texture is thus printed onto a decoration sheet and the base colour is provided outermost as seen from the decoration sheet. In method step 304, the decoration sheet is fed into a first mould and aligned therein, and the decoration sheet is heated in order to make the printing material easier to detach from the decoration sheet. In step 306, a second mould is brought into connection with the first mould, and the moulds are combined in order to produce a confined space. Melted plastic is injected into a cavity formed in the space defined by the moulds, the printing material located on the decoration sheet thus being attached to the plastic structure being produced. In step 308, the plastic structure is cooled down and the decoration sheet is removed from the production equipment.

Although the invention has been described above with reference to the examples in accordance with the accompanying drawings, it is obvious that the invention is not restricted thereto but can be modified in many ways within the scope of the inventive idea disclosed in the attached claims.

## Claims

1. A method for producing a decorative print onto a decoration sheet to be used in connection with injection moulding when decorating a structure, **characterized by** providing (302) the decoration sheet with a decorative print comprising a texture using a functional colourant and a base colour at least partly on top of the texture, whereby a critical angle exists for viewing the decorative print, and at viewing angles larger than the critical angle the texture is transparent such that the base colour to be provided against the structure is visible, and an angle area exists comprising viewing angles smaller than the critical angle, from which angles the texture can be seen.

2. A method as claimed in claim 1, **characterized in that** at viewing angles smaller than the viewing angles within said angle area, the texture is invisible.

3. A method as claimed in claim 1, **characterized in that** the functional colourant comprises optical lamellas, strips, discs or other such elements affecting the way in which light is reflected or deflected.

4. A method as claimed in claim 1, **characterized in that** the functional colourant is a pearlescent colour or an interference colour.

5. A method as claimed in claim 1, **characterized in that** the texture to be formed using a functional colourant comprises one or more of the following: one or more symmetrical patterns, one or more asymmetrical patterns, one or more design patterns.

6. A method as claimed in claim 1, **characterized in that** the base colour used is a light colour.

7. A method as claimed in claim 6, **characterized in that** the light colour is a shade of grey on a CMYK scale, the degree of greyness of the shade of grey being less than 50%.

8. A method as claimed in claim 1, **characterized in that** the base colour used is a solid colour.

9. A method as claimed in claim 1, **characterized in that** the method for decorating an injection-moulding structure used in the method is IMD (In-Mould Decoration) and polymer plastic suitable for the IMD method is used as the decoration sheet.

10. A method as claimed in claim 1, **characterized by** cutting off the decoration sheet containing the decorative print in connection with injection moulding to be attached, together with the decorative print, to the structure being decorated.

11. A method as claimed in claim 1, **characterized by** producing textual graphics lowermost onto the decoration sheet, and texture at least partly on top of the textual graphics comprising at least one of the following: text symbol, character, pattern.

12. A method as claimed in claim 1, **characterized by** using screen printing in the decorative printing of the decoration sheet.

13. A method as claimed in claim 1, **characterized in that** the structure being subjected to decorative printing is made of polymer plastic.

14. A method as claimed in claim 1, **characterized in that** the structure being subjected to decorative printing is a three-dimensional part.

15. A method as claimed in claim 1, **characterized in that** the structure being subjected to decorative printing is a watch-like structure, such as a watch, heart rate monitor or a wrist computer.

16. A method for producing a surface decoration of a structure in connection with injection moulding, the method comprising inserting (304) a decoration sheet comprising a decorative print into a mould defining the shape of the structure and injecting (306) melted structural material into the mould in order to produce the structure and decorate the structure with the decorative print in the decoration sheet, **characterized in that** the decorative print of the decoration sheet comprises a base colour to be provided against the plastic structure and a texture formed using a functional colourant, the texture being transparent when viewed from viewing angles larger than a critical angle with respect to the surface of the decorative print such that the base colour is visible, the texture being visible at viewing angles smaller than the critical angle.

17. A method as claimed in claim 16, **characterized in that** an angle area is provided in viewing angles of the decorative print that are smaller than said critical angle, and at the viewing angles within the angle area the texture is visible but at angles smaller than the angles defining the angle area the texture becomes invisible.

18. A method as claimed in claim 16, **characterized in that** the functional colourant comprises optical lamellas, strips, discs or other such elements affecting the way in which light is reflected or deflected.

19. A method as claimed in claim 16, **characterized in that** the functional colourant comprises optical lamellas, strips, discs or other such parts changing the direction of light.

20. A method as claimed in claim 16, **characterized in that** the functional colourant is a pearlescent colour or an interference colour.

21. A method as claimed in claim 16, **characterized in that** the texture to be formed using a functional colourant comprises one or more of the following: one or more symmetrical patterns, one or more asymmetrical patterns, one or more design patterns.

22. A method as claimed in claim 16, **characterized in that** the functional colourant is a shade of grey on a CMYK scale, the degree of greyness of the shade of grey being less than 50%.

23. A method as claimed in claim 16, **characterized in that** the method for decorating an injection moulding structure used in the method is IMD (In-Mould Decoration) and polymer plastic suitable for the IMD method is used as the decoration sheet.

24. A method as claimed in claim 16, **characterized by** using screen printing in the decorative printing of the decoration sheet.

25. A method as claimed in claim 16, **characterized in that** the structure being subjected to decorative printing is a three-dimensional part.

26. A method as claimed in claim 16, **characterized in that** the structure being subjected to decorative printing is a watch-like structure, such as a watch, heart rate monitor or a wrist computer or the like.

27. A plastic structure (208) manufactured by injection moulding, comprising a surface (208A) and a decorative print (202 to 204) at least partly covering the surface (208A), **characterized in that** starting from the surface of the plastic structure (208), the decorative print (202 to 204) comprises the following layers: a base colour (204) and a texture (202) made of a functional colourant, whereby a critical angle exists, and at viewing angles larger than the critical angle with respect to the decorative print (200 to 204), the texture is transparent such that the base colour (204) is visible.

28. A plastic structure as claimed in claim 27, **characterized in that** the surface subjected to decorative printing comprises surface profiles different from the surface plane.

29. A plastic structure as claimed in claim 27, **characterized in that** at viewing angles smaller than the critical angle, the texture is visible.

30. A plastic structure as claimed in claim 27, **characterized in that** a second critical angle of viewing the decorative print exists, and at viewing angles smaller than the second critical angle the texture is invisible.

31. A plastic structure as claimed in claim 27, **characterized in that** the functional colourant comprises optical parts, such as lamellas, strips, discs or other such parts, which change the direction of light.

32. A plastic structure as claimed in claim 27, **characterized in that** the functional colourant is a pearlescent colour or an interference colour.

33. A plastic structure as claimed in claim 27, **characterized in that** the texture comprises one or more of the following: one or more symmetrical patterns, one or more asymmetrical patterns, one or more design patterns.

34. A plastic structure as claimed in claim 27, **characterized in that** the base colour is a shade of grey on a CMYK scale, the degree of greyness of the shade of grey being less than 50%.

35. A plastic structure as claimed in claim 27, **characterized in that** the base colour is a solid colour.

36. A plastic structure as claimed in claim 27, **characterized in that** the plastic structure is a plastic structure manufactured using an injection moulding method, and the decorative print of the plastic structure is produced using an IMD (In-Mould Decoration) method, and polymer plastic suitable for the IMD method is used as the decoration sheet.

37. A plastic structure as claimed in claim 27, **characterized in that** the structure subjected to decorative printing is made of polymer plastic.

38. A plastic structure as claimed in claim 27, **characterized in that** the structure being subjected to decorative printing is a three-dimensional part.

39. A plastic structure as claimed in claim 27, **characterized in that** the structure being subjected to decorative printing is a watch-like portable device, such as a watch, wrist computer or a heart rate monitor.
